# EUROPEAN PATENT APPLICATION

(11) **EP 4 678 668 A1**
(43) Date of publication of application: **14.01.2026**
(21) Application number: 24770665.8
(22) Date of filing: 06.03.2024
(51) Int. Cl.: C08F 232/00, C08F 4/42, C08F 4/64, C08F 4/70, C08F 4/76, C08F 4/80, C08F 210/00

(54) **FLUORINE-CONTAINING CYCLIC OLEFIN (CO)POLYMER AND METHOD FOR PRODUCING SAME**

(30) Priority: 10.03.2023 JP 2023037571
(71) Applicant: DAIKIN INDUSTRIES, LTD., Osaka-Shi, Osaka 530-0001 (JP)
(72) Inventor: TADA, Tomoyuki, Fuji-shi, Shizuoka 416-8533 (JP); MIYAGI, Yu, Fuji-shi, Shizuoka 416-8533 (JP); OKUNO, Shingo, Osaka-shi, Osaka 530-0001 (JP); HANDA, Shinya, Osaka-shi, Osaka 530-0001 (JP); YAMAUCHI, Akiyoshi, Osaka-shi, Osaka 530-0001 (JP); KISHIKAWA, Yosuke, Osaka-shi, Osaka 530-0001 (JP)
(74) Representative: Hoffmann Eitle
(86) International application number: PCT/JP2024/008464
(87) International publication number: WO 2024/190556

(57) **Abstract**

A fluorine-containing cyclic olefin (co)polymer containing a structural unit represented by general formula (1) shown below and a structural unit derived from an α-olefin having 2 to 10 carbon atoms, wherein the amount of the structural unit represented by general formula (1) exceeds 40 mol%, and the amount of the structural unit derived from an α-olefin having 2 to 10 carbon atoms is at least 0 mol% but less than 60 mol%. [In general formula (1), R¹ to R⁸ each represent a hydrogen atom, a halogen atom, or a hydrocarbon group, R⁹ to R¹² each represent a hydrogen atom, a fluorine atom, a substituted or unsubstituted alkyl group, or an alkyl group having a fluorine atom, or the like, and at least one fluorine atom is included in R⁹ to R¹². Further, m represents 0 or a positive integer.]

## Description

### TECHNICAL FIELD

The present invention relates to a fluorine-containing cyclic olefin (co)polymer and a method for producing the (co)polymer.

### BACKGROUND ART

Cyclic olefin (co)polymers have characteristics that include high heat resistance, superior transparency and low dielectric properties, and are used in a wide variety of fields, including not only fields relating to optical material such as optical disc substrates, optical films and optical fibers, but also as resin layers or the like in metal-clad laminates (such as printed substrates). Representative examples of cyclic olefin (co)polymers include copolymers of cyclic olefins and α-olefins, which are widely used as transparent resins.

On the other hand, fluororesins typified by PTFE (polytetrafluoroethylene) and ETFE (ethylene tetrafluoroethylene) have many excellent characteristics, including high heat resistance, superior chemical resistance, low dielectric properties, favorable water repellency and mold releasability, low friction properties, and superior insulation properties. As a result, fluororesins are used in all manner of applications utilizing these various characteristics. However, molding of fluororesins is not easy, and obtaining molded articles is problematic. In contrast, cyclic olefin (co)polymers are generally easy to mold, and therefore if the advantages of fluororesins could be imparted to cyclic olefin (co)polymers, novel materials that are easy to mold and potential replacements for fluororesins could be obtained.

Accordingly, it is anticipated that by fluorinating norbornene and performing either a homopolymerization or a copolymerization with an α-olefin, a fluorine-rich cyclic olefin (co)polymer can be obtained, yielding a material that combines the characteristics of a cyclic olefin (co)polymer and the characteristics of a fluororesin (see Patent Document 1).

### PRIOR ART DOCUMENTS

### PATENT DOCUMENT

Patent Document 1: JP 2019-131658 A

### SUMMARY OF THE INVENTION

### PROBLEMS TO BE SOLVED BY THE INVENTION

However, the fluorine-containing cyclic olefin-based copolymer disclosed in Patent Document 1 has a low fluorine-containing cyclic olefin content of at least 20 mol% but not more than 40 mol%, and therefore similar characteristics to a fluororesin cannot be expected. This issue could be resolved by increasing the fluorine-containing cyclic olefin content, but fluorinated norbornene has low reactivity and is difficult to polymerize, meaning increasing the amount of the fluorine-containing cyclic olefin is problematic.

The present invention has been developed in light of the above circumstances, and has an object of providing a fluorine-containing cyclic olefin (co)polymer having a high fluorinated norbornene content.

Further, another object of the present invention is to provide a method for producing a fluorine-containing cyclic olefin (co)polymer that enables the production of a fluorine-containing cyclic olefin (co)polymer having a high fluorinated norbornene content.

### MEANS TO SOLVE THE PROBLEMS

As a result of intensive investigation aimed at achieving the objects described above, the inventors of the present invention discovered that in a cyclic olefin (co)polymer polymerization using a fluorinated norbornene as a monomer, by using the fluorinated norbornene not only as a monomer but also as a solvent, the fluorinated norbornene content in the (co)polymer could be increased, enabling them to complete the present invention.

One aspect of the present invention for achieving the objects described above is as described below.
(1) A fluorine-containing cyclic olefin (co)polymer containing a structural unit represented by general formula (1) shown below and a structural unit derived from an α-olefin having 2 to 10 carbon atoms, wherein
   the amount of the structural unit represented by general formula (1) exceeds 40 mol%, and the amount of the structural unit derived from an α-olefin having 2 to 10 carbon atoms is at least 0 mol% but less than 60 mol%. 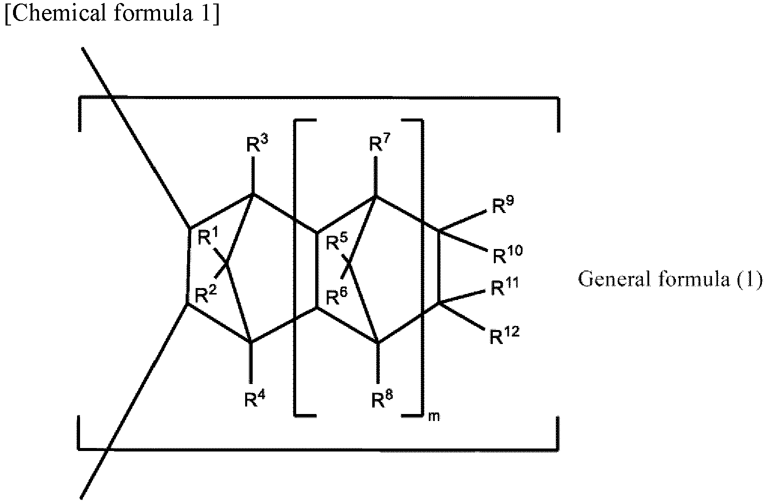
[In general formula (1), R¹ to R⁸ each represent, independently, a moiety selected from the group consisting of a hydrogen atom, halogen atoms and hydrocarbon groups, and
R⁹ to R¹² each represent, independently, a hydrogen atom, a fluorine atom, a substituted or unsubstituted alkyl group, an alkyl group having a fluorine atom, an alkoxy group having a fluorine atom, an ether linkage-containing alkyl group having a fluorine atom, or a substituent represented by -COOR¹³ or -OCOR¹³, provided that at least one fluorine atom is included within R⁹ to R¹², and R⁹ or R¹⁰, and R¹¹ or R¹² may be bonded together to form a ring.

R¹³ represents a substituted or unsubstituted alkyl group, or an alkyl group having a fluorine atom.

Further, m represents 0 or a positive integer, and when m is 2 or greater, each of R⁵ to R⁸ in the repeating units may be the same or different. When m=0, at least one of R¹ to R⁴ and R⁹ to R¹² is not a hydrogen atom.]

(2) The fluorine-containing cyclic olefin (co)polymer according to (1), wherein the (co)polymer is amorphous.

(3) The fluorine-containing cyclic olefin (co)polymer according to (1) or (2), wherein a DSC curve, obtained in accordance with the method disclosed in JIS K7121 by conducting measurements with a differential scanning calorimeter under conditions including a nitrogen atmosphere and a rate of temperature increase of 20°C/minute, has no melting point peak within a range from 25 to 350°C.

(4) A method for producing a fluorine-containing cyclic olefin (co)polymer, the method including:
an addition step of adding, at least, monomers including a monomer represented by general formula (2) shown below and an α-olefin having 2 to 10 carbon atoms, a catalyst, and a solvent to a polymerization vessel, and
a polymerization step of polymerizing the monomers in the polymerization vessel in the presence of the catalyst, wherein
in the addition step, the amount added of the monomer represented by general formula (2) exceeds 40 mol%, the amount added of the α-olefin having 2 to 10 carbon atoms is at least 0 mol% but less than 60 mol%, and the monomer represented by general formula (2) is also used as a solvent, wherein the amount added of the monomer represented by general formula (2) exceeds 50% by mass of the solvent. 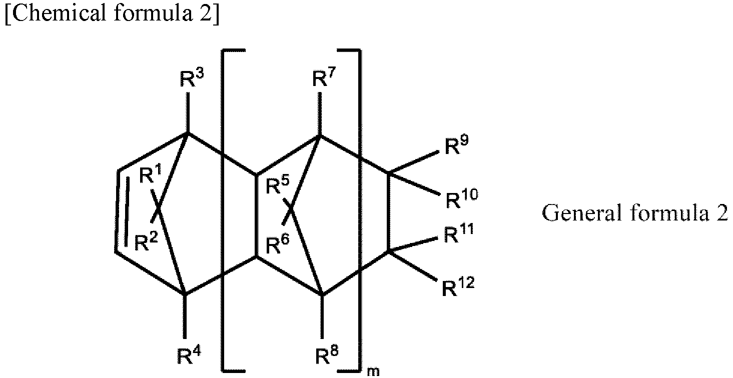
[In general formula (2), R¹ to R¹² each represent, independently, a hydrogen atom, a halogen atom, a hydrocarbon group, a substituted or unsubstituted alkyl group, an alkyl group having a fluorine atom, an alkoxy group having a fluorine atom, an ether linkage-containing alkyl group having a fluorine atom, or a substituent represented by -COOR¹³ or -OCOR¹³, provided that at least one fluorine atom is included within R¹ to R¹², and R⁹ or R¹⁰, and R¹¹ or R¹² may be bonded together to form a ring.
R¹³ represents a substituted or unsubstituted alkyl group, or an alkyl group having a fluorine atom.

Further, m represents 0 or a positive integer, and when m is 2 or greater, each of R⁵ to R⁸ in the repeating units may be the same or different. When m=0, at least one of R¹ to R⁴ and R⁹ to R¹² is not a hydrogen atom.]

(5) The method for producing a fluorine-containing cyclic olefin (co)polymer according to (4), wherein at least one catalyst is a catalyst containing a metal element from group 10 of the periodic table or a catalyst containing a metal element from group 4 of the periodic table.

(6) The method for producing a fluorine-containing cyclic olefin (co)polymer according to (5), wherein in those cases where at least one catalyst is a catalyst containing a metal element from group 10 of the periodic table, the catalyst does not contain aluminoxane.

(7) The method for producing a fluorine-containing cyclic olefin (co)polymer according to (5), wherein in those cases where at least one catalyst is a catalyst containing a metal element from group 10 of the periodic table, the catalyst does not contain an organoboron compound.

### EFFECTS OF THE INVENTION

The present invention is able to provide a fluorine-containing cyclic olefin (co)polymer having a high fluorinated norbornene content.

Further, the present invention can also provide a method for producing a fluorine-containing cyclic olefin (co)polymer that enables production of a fluorine-containing cyclic olefin (co)polymer having a high fluorinated norbornene content.

### EMBODIMENTS FOR CARRYING OUT THE INVENTION

### <Fluorine-Containing Cyclic Olefin (Co)polymer>

The fluorine-containing cyclic olefin (co)polymer of one embodiment of the present invention contains a structural unit represented by general formula (1) shown below and a structural unit derived from an α-olefin having 2 to 10 carbon atoms. Further, the amount of the structural unit represented by general formula (1) exceeds 40 mol%, and the amount of the structural unit derived from an α-olefin having 2 to 10 carbon atoms is at least 0 mol% but less than 60 mol%. 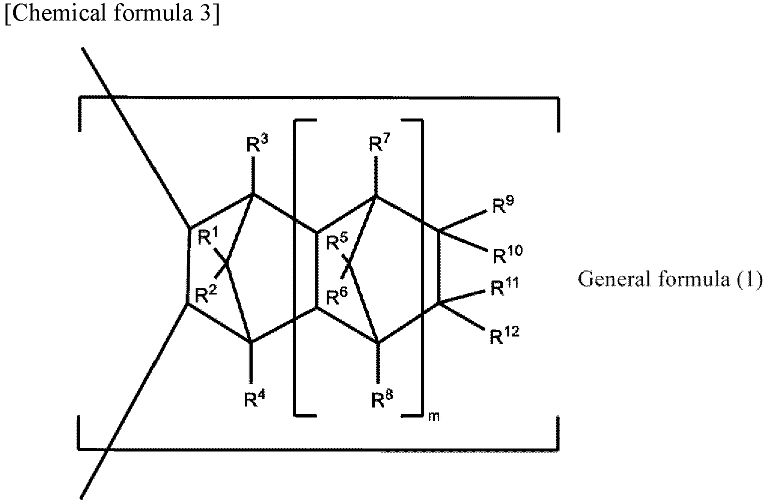 [In general formula (1), R¹ to R⁸ each represent, independently, a moiety selected from the group consisting of a hydrogen atom, halogen atoms and hydrocarbon groups, and
R⁹ to R¹² each represent, independently, a hydrogen atom, a fluorine atom, a substituted or unsubstituted alkyl group, an alkyl group having a fluorine atom, an alkoxy group having a fluorine atom, an ether linkage-containing alkyl group having a fluorine atom, or a substituent represented by -COOR¹³ or -OCOR¹³, provided that at least one fluorine atom is included within R⁹ to R¹², and R⁹ or R¹⁰, and R¹¹ or R¹² may be bonded together to form a ring.

R¹³ represents a substituted or unsubstituted alkyl group, or an alkyl group having a fluorine atom.

Further, m represents 0 or a positive integer, and when m is 2 or greater, each of R⁵ to R⁸ in the repeating units may be the same or different. When m=0, at least one of R¹ to R⁴ and R⁹ to R¹² is not a hydrogen atom.]

In the fluorine-containing cyclic olefin (co)polymer of this embodiment, the amount of the structural unit represented by general formula (1), namely the fluorinated norbornene content, exceeds 40 mol%, and therefore the fluorine content is high and the characteristics of a fluororesin (such as high heat resistance, superior chemical resistance, low dielectric properties, favorable water repellency, low friction properties, and superior insulation properties) can be achieved to a certain extent. Accordingly, the fluorine-containing cyclic olefin (co)polymer of this embodiment can be used as a substitute for fluororesins or ionomers such as Nafion. Moreover, the fluorine-containing cyclic olefin (co)polymer also exhibits favorable moldability. Consequently, the fluorine-containing cyclic olefin (co)polymer of this embodiment exhibits promise as a novel material that combines the characteristics of a cyclic olefin (co)polymer and the characteristics of a fluororesin.

In those cases where the amount of the structural unit derived from an α-olefin having 2 to 10 carbon atoms is 0 mol%, a homopolymer containing only structural units represented by general formula (1) is obtained. When the amount of the structural unit derived from an α-olefin having 2 to 10 carbon atoms exceeds 0 mol%, a copolymer containing structural units represented by general formula (1) and structural units derived from the α-olefin having 2 to 10 carbon atoms is obtained. In other words, the expression "fluorine-containing cyclic olefin (co)polymer" includes the meanings of both a fluorine-containing cyclic olefin polymer and a fluorine-containing cyclic olefin copolymer.

Each of the structural units of the fluorine-containing cyclic olefin (co)polymer of this embodiment of the present invention is described below.

### [Structural Unit Represented by General Formula (1)]

As mentioned above, the structural unit represented by general formula (1) is a structural unit derived from a fluorinated norbornene. In the fluorine-containing cyclic olefin (co)polymer of this embodiment, because the amount of the structural unit represented by general formula (1) exceeds 40 mol%, a fluorine-rich cyclic olefin (co)polymer is obtained.

In general formula (1), R¹ to R⁸ each represent, independently, a moiety selected from the group consisting of a hydrogen atom, halogen atoms and hydrocarbon groups. R¹ to R⁸ in general formula (1) may be the same or different.

Specific examples of R¹ to R⁸ include a hydrogen atom; a halogen atom such as a fluorine atom, chlorine atom, or bromine atom; and alkyl groups and the like having 1 to 20 carbon atoms, and all or some of these groups may be different from the other groups, or all of the groups may be the same.

R⁹ to R¹² each represent, independently, a hydrogen atom, a fluorine atom, a substituted or unsubstituted alkyl group, an alkyl group having a fluorine atom, an alkoxy group having a fluorine atom, an ether linkage-containing alkyl group having a fluorine atom, or a substituent represented by -COOR¹³ or -OCOR¹³, provided that at least one fluorine atom is included within R⁹ to R¹², and R⁹ or R¹⁰, and R¹¹ or R¹² may be bonded together to form a ring.

R¹³ represents a substituted or unsubstituted alkyl group, or an alkyl group having a fluorine atom.

Any substituted or unsubstituted alkyl groups represented by R⁹ to R¹² in general formula (1) preferably have 1 to 30 carbon atoms, and more preferably 1 to 20 carbon atoms. Examples of such alkyl groups include a methyl group, ethyl group and n-propyl group.

Examples of the substituted alkyl group include an aralkyl group, hydroxyalkyl group (such as a hydroxyethyl group), and alkoxyalkyl group (such as a methoxyethyl group).

The aralkyl group preferably has 7 to 30 carbon atoms, and more preferably 7 to 20 carbon atoms. Examples of the aralkyl group include a benzyl group ad a phenethyl group.

Examples of other substituents in the substituted alkyl group include halogen atoms (such as a fluorine atom, chlorine atom, bromine atom or iodine atom) and alkoxy groups (such as a methoxy group or ethoxy group).

Examples of the alkyl group having a fluorine atom represented by R⁹ to R¹² include fluorine-containing alkyl groups having 1 to 30 carbon atoms, and perfluoroalkyl groups having 1 to 10 carbon atoms are preferred, with perfluoroalkyl groups having 1 to 4 carbon atoms being more preferred.

Examples of the alkoxy group having a fluorine atom represented by R⁹ to R¹² include fluorine atom-containing alkoxy groups having 1 to 30 carbon atoms, and perfluoroalkoxy groups having 1 to 10 carbon atoms are preferred.

Examples of the ether linkage-containing alkyl group having a fluorine atom represented by R⁹ to R¹² include fluorine atom-containing alkoxy groups having 1 to 30 carbon atoms, and perfluoroalkoxy groups having 1 to 10 carbon atoms are preferred.

A group represented by -COOR¹³ or -OCOR¹³ is also preferred for R⁹ to R¹², wherein R¹³ represents a substituted or unsubstituted alkyl group, or an alkyl group having a fluorine atom, and is preferably an alkyl group having a fluorine atom. Further, among -COOR¹³ and -OCOR¹³, a group represented by -COOR¹³ is preferred. Examples of the substituted or unsubstituted alkyl group, and the alkyl group having a fluorine atom for R¹³ include the same groups as those mentioned above for R⁹ to R¹².

Each of R⁹ to R¹² is preferably a fluorine atom, an alkyl group having a fluorine atom, or an alkoxy group having a fluorine atom, and is more preferably a fluorine atom or an alkyl group having a fluorine atom.

At least two of R⁹ to R¹² may be bonded together to form a ring structure. The ring structure may be either monocyclic or polycyclic. Specific examples include cases in which two of R⁹ to R¹² are bonded together to form an alkylene group, or more specifically, cases in which either R⁹ or R¹⁰, and either R¹¹ or R¹², are bonded together to form an alkylene group.

Specific examples of cases in which R⁹ or R¹⁰, and R¹¹ or R¹², are linked together to form a divalent hydrocarbon group include alkylidene groups such as an ethylidene group, propylidene group, and isopropylidene group.

In those cases where R⁹ or R¹⁰, and R¹¹ or R¹², are mutually linked to form a ring, the ring that is formed may be either monocyclic or polycyclic, may be polycyclic with a bridge, may be a ring that has a double bond, or may be a combination of any of these ring structures. Further, these rings may also have one or more substituents such as a methyl group.

At least one fluorine atom is included within R⁹ to R¹², it is preferable that three or more fluorine atoms are included within R⁹ to R¹², and it is particularly desirable that at least one trifluoromethyl group (-CF₃ group) is included within R⁹ to R¹².

Furthermore, m in general formula (1) preferably represents 0 or 1, and is preferably 1. Further, in general formula (1), it is more preferable that m represents 1, and at least three of R⁹ to R¹² represent fluorine atoms. Furthermore, in general formula (1), it is particularly desirable that m represents 1, three of R⁹ to R¹² represent fluorine atoms, and one of R⁹ to R¹² represents a trifluoromethyl group (-CF₃ group).

Specific examples of the monomer that yields the structural unit represents general formula (1) are presented below. However, these examples represent the compounds prior to fluorine substitution, and the actual compounds are compounds in which at least one of the atoms or atom groupings corresponding with R⁹ to R¹² in general formula (1) has been substituted with a fluorine atom or a substituent having a fluorine atom.

Bicyclic cycloolefins such as 5-methyl-bicyclo[2.2.1]hept-2-ene, 5,5-dimethyl-bicyclo[2.2.1]hept-2-ene, 5-ethyl-bicyclo[2.2.1]hept-2-ene, 5-butyl-bicyclo[2.2.1]hept-2-ene, 5-ethylidene-bicyclo[2.2.1]hept-2-ene, 5-hexyl-bicyclo[2.2.1]hept-2-ene, 5-octyl-bicyclo[2.2.1]hept-2-ene, 5-octadecyl-bicyclo[2.2.1]hept-2-ene, 5-methylidene-bicyclo[2.2.1]hept-2-ene, 5-vinyl-bicyclo[2.2.1]hept-2-ene, and 5-propenyl-bicyclo[2.2.1]hept-2-ene;
tricyclic cycloolefins such as tricyclo[4.3.0.12,5]deca-3,7-diene (common name: dicyclopentadiene), and tricyclo[4.3.0.12,5]dec-3-ene; tricyclo[4.4.0.12,5]undeca-3,7-diene, tricyclo[4.4.0.12,5]undeca-3,8-diene, and partial hydrogenation products thereof (or adducts of cyclopentadiene and cyclohexene) such as tricyclo[4.4.0.12,5]undec-3-ene; as well as 5-cyclopentyl-bicyclo[2.2.1]hept-2-ene, 5-cyclohexyl-bicyclo[2.2.1]hept-2-ene, 5-cyclohexenylbicyclo[2.2.1]hept-2-ene, and 5-phenyl-bicyclo[2.2.1]hept-2-ene;
tetracyclic cycloolefins such as tetracyclo[4.4.0.12,5.17,10]dodec-3-ene (also simply referred to as tetracyclododecene), 8-methyltetracyclo[4.4.0.12,5.17,10]dodec-3-ene, 8-ethyltetracyclo[4.4.0.12,5.17,10]dodec-3-ene, 8-methylidene tetracyclo[4.4.0.12,5.17,10]dodec-3-ene, 8-ethylidenetetracyclo[4.4.0.12,5.17,10]dodec-3-ene, 8-vinyltetracyclo[4,4.0.12,5.17,10]dodec-3-ene, and 8-propenyl-tetracyclo[4.4.0.12,5.17,10]dodec-3-ene; and
polycyclic cycloolefins such as 8-cyclopentyl-tetracyclo[4.4.0.12,5.17,10]dodec-3-ene, 8-cyclohexyl-tetracyclo[4.4.0.12,5.17,10]dodec-3-ene, 8-cyclohexenyl-tetracyclo[4.4.0.12,5.17,10]dodec-3-ene, and 8-phenyl-cyclopentyl-tetracyclo[4.4.0.12,5.17,10]dodec-3-ene; tetracyclo[7.4.13,6.01,9.02,7]tetradeca-4,9,11,13-tetraene (also referred to as 1,4-methano-1,4,4a,9a-tetrahydrofluorene), and tetracyclo[8.4.14,7.01,10.03,8]pentadeca-5,10,12,14-tetraene (also referred to as 1,4-methano-1,4,4a,5,10,10a-hexahydroanthracene); pentacyclo[6.6.1.13,6.02,7.09,14]-4-hexadecene, pentacyclo[6.5.1.13,6.02,7.09,13]-4-pentadecene, and pentacyclo[7.4.0.02,7.13,6.110,13]-4-pentadecene; heptacyclo[8.7.0.12,9.14,7.111, 17.03,8.012, 16]-5-eicosene and heptacyclo[8.7.0.12,9.03,8.14,7.012,17.113,16]-14-eicosene; and tetramers of cyclopentadiene.

Among these compounds, alkyl-substituted norbornenes (for example, bicyclo[2.2.1]hept-2-ene that has been substituted with one or more alkyl groups) and alkylidene-substituted norbornenes (for example, bicyclo[2.2.1]hept-2-ene that has been substituted with one or more alkylidene groups) are preferred, and 5-ethylidene-bicyclo[2.2.1]hept-2-ene (common name: 5-ethylidene-2-norbornene, or simply ethylidene norbornene) is particularly desirable.

Two specific examples of the monomer that yields the structural unit represented by general formula (1) are shown below. However, the fluorine-containing cyclic olefin (co)polymer of this embodiment of the present invention is not limited to the following examples.

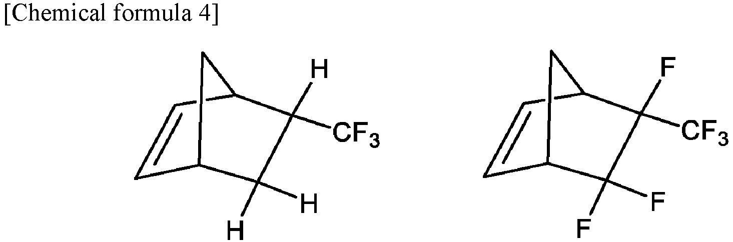

The amount of the above structural unit represented by general formula (1) exceeds 40 mol%, and is preferably at least 60 mol%, and more preferably 80 mol% or greater. If the amount of this structural unit is less than 40 mol%, then achieving certain fluororesin characteristics such as water repellency and low dielectric properties becomes difficult.

### [Structural Unit Derived from α-Olefin having 2 to 10 Carbon Atoms]

There are no particular limitations on the α-olefin having 2 to 10 carbon atoms that yields the structural unit derived from an α-olefin having 2 to 10 carbon atoms, and examples include ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, and 1-dodecene. Among these, ethylene, 1-hexene, 1-octene and 1-decene are preferred.

The amount of the structural unit derived from an α-olefin having 2 to 10 carbon atoms is at least 0 mol% but less than 60 mol%. As mentioned above, when the amount of this structural unit is 0 mol%, a homopolymer containing only structural units represented by general formula (1) is obtained, whereas when the amount exceeds 0 mol%, a copolymer containing structural units derived from this α-olefin and structural units derived from the general formula (1) is obtained. In the case of a copolymer, the amount of the structural unit derived from the α-olefin having 2 to 10 carbon atoms is preferably within a range from 5 to 59 mol%, more preferably from 10 to 50 mol%, and even more preferably from 20 to 40 mol%.

As mentioned above, the fluorine-containing cyclic olefin (co)polymer of this embodiment exhibits the characteristic of favorable moldability typical of cyclic olefin (co)polymers. Moreover, the cyclic olefin copolymer exhibits even better moldability than the cyclic olefin homopolymer.

The fluorine-containing cyclic olefin (co)polymer of this embodiment is preferably amorphous. An amorphous (co)polymer is transparent, enabling application to molded items that require transparency. Expressed in different terms, a DSC curve for the fluorine-containing cyclic olefin (co)polymer of this embodiment, obtained in accordance with the method disclosed in JIS K7121 by conducting measurements with a differential scanning calorimeter under conditions including a nitrogen atmosphere and a rate of temperature increase of 20°C/minute, preferably has no melting point peak within the range from 25 to 350°C. **In** other words, the fact that this type of DSC curve has no melting point peak within the range from 25 to 350°C means the fluorine-containing cyclic olefin (co)polymer is transparent.

As mentioned above, the fluorine-containing cyclic olefin (co)polymer of this embodiment can achieve the characteristics of a fluororesin to a certain extent. As a result, the (co)polymer can be used as a fuel cell release film that utilizes the favorable mold releasability and low dielectric properties, or as a high-frequency antenna substrate, antenna, printed substrate, thin-film coating for a fuel cell membrane, catalyst coating, sensor, or heat-resistant industrial film or the like that utilizes the low dielectric properties.

The fluorine-containing cyclic olefin (co)polymer of the embodiment described above can be produced using the method for producing a fluorine-containing cyclic olefin (co)polymer of an embodiment of the present invention described below.

### <Method for Producing Fluorine-Containing Cyclic Olefin (Co)polymer>

The method for producing a fluorine-containing cyclic olefin (co)polymer according to one embodiment of the present invention includes an addition step of adding, at least, monomers including a monomer represented by general formula (2) shown below and an α-olefin having 2 to 10 carbon atoms, a catalyst, and a solvent to a polymerization vessel, and a polymerization step of polymerizing the monomers in the polymerization vessel in the presence of the catalyst. In the addition step, the amount added of the monomer represented by general formula (2) exceeds 40 mol%, the amount added of the α-olefin having 2 to 10 carbon atoms is at least 0 mol% but less than 60 mol%, and the monomer represented by general formula (2) is also used as a solvent, wherein the amount added of the monomer represented by general formula (2) exceeds 50% by mass of the solvent. 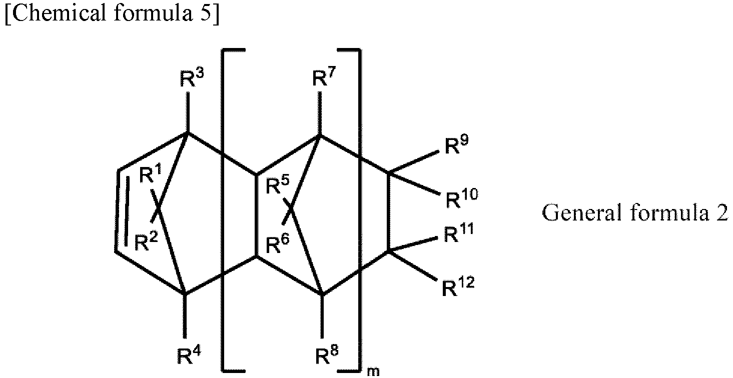 [In general formula (2), R¹ to R¹² each represent, independently, a hydrogen atom, a halogen atom, a hydrocarbon group, a substituted or unsubstituted alkyl group, an alkyl group having a fluorine atom, an alkoxy group having a fluorine atom, an ether linkage-containing alkyl group having a fluorine atom, or a substituent represented by -COOR¹³ or -OCOR¹³, provided that at least one fluorine atom is included within R¹ to R¹², and R⁹ or R¹⁰, and R¹¹ or R¹² may be bonded together to form a ring.

R¹³ represents a substituted or unsubstituted alkyl group, or an alkyl group having a fluorine atom.

Further, m represents 0 or a positive integer, and when m is 2 or greater, each of R⁵ to R⁸ in the repeating units may be the same or different. When m=0, at least one of R¹ to R⁴ and R⁹ to R¹² is not a hydrogen atom.]

In the method for producing a fluorine-containing cyclic olefin (co)polymer according to this embodiment, in the addition step, the monomer represented by general formula (2) is added not only as a monomer, but also as a solvent. In other words, in the polymerization step, the polymerization is conducted as a bulk polymerization. Accordingly, the reaction rate of the monomer represented by general formula (2) improves compared with the case where a different solvent is used, meaning the amount of structural units derived from the monomer represented by general formula (2) in the fluorine-containing cyclic olefin (co)polymer can be increased. As a result, a fluorine-rich (co)polymer can be obtained that exhibits the properties of a fluororesin to a certain extent.

The monomer represented by general formula (2) is the monomer that yields the structural unit represented by general formula (1) described above. Accordingly, the same descriptions as those presented above in relation to the structural unit represented by general formula (1) can be applied to the description for R¹ to R⁸ and the description for R⁹ to R¹², and specific examples and preferred forms and examples are the same as those described above. Accordingly, a more detailed description of the monomer represented by general formula (2) is omitted here.

Similarly, the monomer containing an α-olefin having 2 to 10 carbon atoms is the monomer that yields the structural unit derived from an α-olefin having 2 to 10 carbon atoms. Accordingly, the same description as that presented above in relation to the structural unit derived from an α-olefin having 2 to 10 carbon atoms can be applied to the description of this α-olefin having 2 to 10 carbon atoms, and specific examples and preferred forms and examples are the same as those described above. Accordingly, a more detailed description of the α-olefin having 2 to 10 carbon atoms is omitted here.

Each of the steps is described below.

### [Addition Step]

In the addition step, at least the monomers including the monomer represented by general formula (2) shown above and the α-olefin having 2 to 10 carbon atoms, a catalyst, and a solvent are added to a polymerization vessel.

Moreover, in the addition step, the amount added of the monomer represented by general formula (2) exceeds 40 mol%, and the amount added of the α-olefin having 2 to 10 carbon atoms is at least 0 mol% but less than 60 mol%. In addition, the monomer represented by general formula (2) is also used as a solvent, and the amount of the monomer represented by general formula (2) within the solvent exceeds 50% by mass.

The monomers are added to the polymerization vessel so that the amount of the monomer represented by general formula (2) exceeds 40 mol%, and the amount of the α-olefin having 2 to 10 carbon atoms is at least 0 mol% but less than 60 mol%. As mentioned above, in the case of a homopolymer, the amount added of the α-olefin having 2 to 10 carbon atoms is 0 mol%. **In** such cases, the amount of the monomer represented by general formula (2) is, of course, 100 mol%.

By ensuring that the amount added of the monomer represented by general formula (2) exceeds 40 mol%, the fluorinated norbornene content of the product fluorine-containing cyclic olefin copolymer increases, yielding a fluorine-rich copolymer that has characteristics of a fluororesin.

### (Catalyst)

A catalyst containing a metal element from group 10 of the periodic table or a catalyst containing a metal element from group 4 of the periodic table or the like can be used as the catalyst. Using a catalyst containing a metal element from group 10 of the periodic table and/or a catalyst containing a metal element from group 4 of the periodic table, in combination with the use of a monomer represented by general formula (2) not only as a monomer but also as a solvent enables the reactivity of the monomer represented by general formula (2) to be further increased. Examples of metal elements from group 10 of the periodic table include nickel (Ni), palladium (Pd) and platinum (Pt), and palladium is particularly preferred. Further, examples of metal elements from group 4 of the periodic table include titanium (Ti), zirconium (Zr) and hafnium (Hf), and Ti is particularly preferred.

Further, examples of catalysts containing a metal element from group 10 of the periodic table include sulfate salts, nitrate salts, chlorides, complexes, and alkylated products of the above metal elements. Examples of catalysts containing a metal element from group 4 of the periodic table include chlorides, complexes, and alkylated products of the above metal elements.

Catalysts containing a metal element from group 10 of the periodic table and catalysts containing a metal element from group 4 of the periodic table have been described above, but in terms of catalytic activity, the former type is preferred to the latter.

The amount used of the catalyst, per 1 mol of the monomer represented by general formula (1) is preferably within a range from 0.000001 to 0.001 mol, and more preferably from 0.00001 to 0.0001 mol.

Moreover, in those cases where the above type of catalyst containing a metal element from group 10 of the periodic table is used, aluminoxane or an organoboron compound need not necessarily be used. In other words, in one embodiment of the present invention, the catalyst need not contain aluminoxane or an organoboron compound.

Aluminoxane refers to various types of aluminoxanes that have conventionally been used as co-catalysts or the like in all manner of olefin polymerizations, wherein these aluminoxanes are typically organic aluminoxanes. Examples of these organic aluminoxanes include methylaluminoxane and modified methylaluminoxane in which a portion of the methyl groups of methylaluminoxane have been substituted with other alkyl groups.

Similarly, the term "organoboron compound" refers to various types of organoboron compounds that have conventionally been used as co-catalysts or the like in all manner of olefin polymerizations, and examples include tetrakis(pentafluorophenyl)trityl borate, dimethylphenylammonium tetrakis(pentafluorophenyl)borate, and N,N-dimethylanilinium tetrakis(pentafluorophenyl)borate.

### (Solvent)

In this embodiment of the present invention, the monomer represented by general formula (2) is also used as a solvent. In other words, the monomer represented by general formula (2) also functions as a solvent. However, the invention is not limited to the case where the monomer represented by general formula (2) accounts for all of the solvent, and other solvents may also be used as required, for example, to dissolve other catalysts. Accordingly, the amount of the monomer represented by general formula (2) within the total solvent exceeds 50% by mass.

The monomer represented by general formula (2) used as a solvent preferably represents at least 10% by mass of the total solvent, more preferably at least 30% by mass, and even more preferably 50% by mass or greater. If there is no need to use any other solvent, the monomer represented by general formula (2) preferably represents 100% by mass of the total solvent.

Examples of solvents that may be used other than the monomer represented by general formula (2) include hydrocarbon solvents such as pentane, hexane, heptane, octane, isooctane, isododecane, mineral oil, cyclohexane, methylcyclohexane, decahydronaphthalene (decalin), benzene, toluene and xylene, and halogenated hydrocarbon solvents such as chloroform, methylene chloride, dichloromethane, dichloroethane and chlorobenzene.

### (Other Components)

Other components may also be added in the addition step. Examples of these other components include chain transfer agents (hydrogen or organometallic compounds) for adjusting the molecular weight of the cyclic olefin (co)polymer.

### [Polymerization Step]

In the polymerization step, the monomer(s) in the polymerization vessel are polymerized in the presence of the catalyst.

There are no particular limitations on the temperature during the polymerization, and for example, a temperature within a range from 0 to 200°C may be used. In terms of achieving a favorable yield of the cyclic olefin (co)polymer, the temperature during polymerization is preferably at least 20°C, more preferably at least 30°C, even more preferably at least 50°C, still more preferably at least 60°C, and particularly preferably 70°C or higher. The temperature during polymerization may be 80°C or higher, or even 85°c or higher.

Although there are no particular limitations on the upper limit for the temperature during polymerization, the temperature may be, for example, not more than 190°C, not more than 180°C, or 160°C or lower.

There are no particular limitations on the polymerization time, and the polymerization may be conducted until the desired yield is obtained, or until the molecular weight of the polymer increases to about the desired level.

The polymerization time varies depending on factors such as the temperature, the composition of the catalyst, and the monomer composition, but is typically within a range from 0.01 to 120 hours, and is preferably within a range from 0.1 to 80 hours, and more preferably from 0.2 to 10 hours.

There are no particular limitations on the polymerization conditions, provided a cyclic olefin (co)polymer with the desired physical properties is obtained, and conventional conditions may be employed.

The cyclic olefin (co)polymer produced using the production method of the embodiment described above corresponds with the cyclic olefin (co)polymer of the embodiment of the present invention described above. Further, as described above, the (co)polymer can be used in a variety of fields as a novel material that combines the characteristics of a cyclic olefin (co)polymer and the characteristics of a fluororesin.

### EXAMPLES

The embodiments of the present invention are described below in further detail using a series of examples, but the embodiments are not limited to the following examples.

### <<Synthesis of Monomer (1) (Fluorinated Norbornene)>>

First, monomers A and B having the structures described below were synthesized as the monomer (1) (fluorinated norbornene) used in the examples and comparative examples.

### (Synthesis of Monomer A)

Cyclopentadiene and 3,3,3-trifluoropentene were mixed in a mass ratio of 1:1, and the mixture was stirred in an autoclave for 84 hours while heating at 135°C, thus obtaining a monomer A.

### (Synthesis of Monomer B)

Cyclopentadiene and hexafluoropropene were mixed in a mass ratio of 1:1, and the mixture was stirred in an autoclave for 72 hours while heating at 220°C, thus obtaining a monomer B.

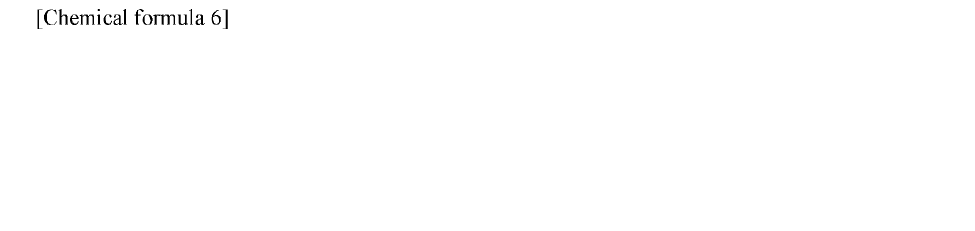

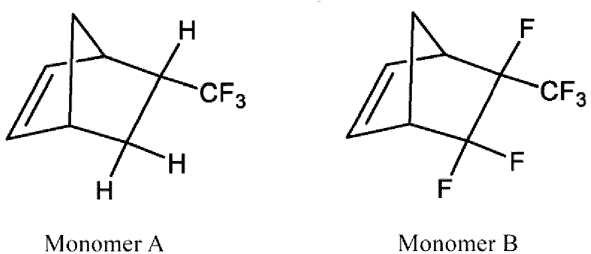

### [Examples 1 to 5, Comparative Examples 1 to 3]

In each example and comparative example, a 30 mL glass round-bottom flask that had been thoroughly flushed with nitrogen was charged, under a nitrogen atmosphere, with 2.2 mL of a fluorinated norbornene as the monomer (1) shown in Table 1. Next, ethylene was streamed into the round-bottom flask as the monomer (2) to saturate the system (although in Example 5, this operation was not conducted, and the process simply proceeded to the next operation). Subsequently, the temperature of the round-bottom flask was raised to 90°C, and once the temperature inside the round-bottom flask had stabilized satisfactorily, a catalyst (1) and a catalyst (2) shown in Table 1 were added in the amounts shown in Table 1. After reacting for 60 minutes, 2-propanol was added to the round-bottom flask to halt the polymerization. This process yielded a cyclic olefin (co)polymer. Only Example 5 yielded a cyclic olefin homopolymer, whereas the other examples and comparative examples yielded cyclic olefin copolymers. In Examples 1 to 5, no separate solvent was added, with the monomer (1) being used as the solvent. In Comparative Examples 1 to 3, toluene was used as a solvent.

Furthermore, of the catalysts used as the catalyst (1), the structures of the Ti catalyst and the Ni catalyst are as shown below. Moreover, Pd₂(dba)₃ refers to tris(dibenzylideneacetone)dipalladium. MMAO-3A used as the catalyst (2) refers to a 6.5% by mass (in terms of the amount of Al atoms) MMAO-3A toluene solution (a methylisobutylaluminoxane solution represented by [(CH₃)_{0.7}(iso-C₄H₉)_{0.3}AlO]ₙ, manufactured by Tosoh Finechem Corporation, containing 6 mol% of trimethylaluminum relative to total Al). 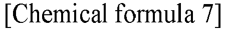 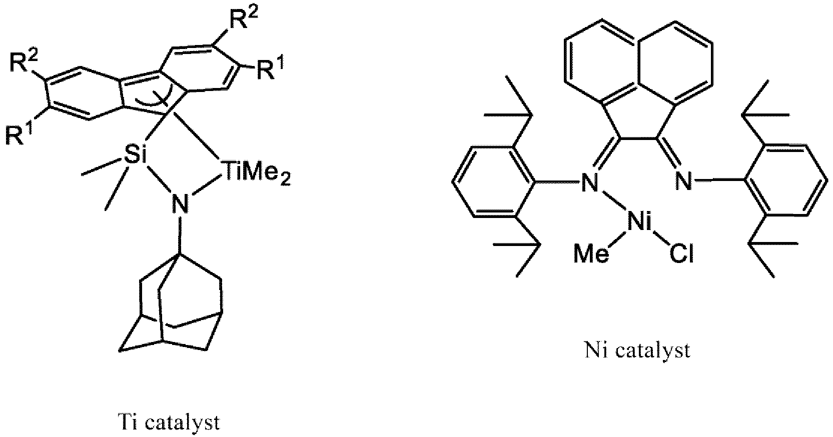 [In the structure of the Ti catalyst, R¹ represents a tert-Bu group, and R² represents a hydrogen atom.]

**[Table 1]**

| | Monomer (1) | | Monomer (2) | Ethylene pressure [MPa] | Catalyst (1) | | Catalyst (2) | Amount of catalyst (2) relative to catalyst (1) [molar ratio] | Solvent |
|---|---|---|---|---|---|---|---|---|---|
| | Type | Ratio | | | Type | Amount [µmol] | | | |
| Example 1 | A | - | Ethylene | 0.1 | Pd₂(dba)₃ | 20 | P(PhOCH₃)₂PhSO₃H | 2 | none |
| Example 2 | A | - | Ethylene | 0.1 | Ti catalyst | 20 | MMAO-3A | 500 | none |
| Example 3 | B | - | Ethylene | 0.1 | Pd₂(dba)₃ | 20 | P(PhOCH₃)₂PhSO₃H | 2 | none |
| Example 4 | A+B | 50/50 | Ethylene | 0.1 | Pd₂(dba)₃ | 20 | P(PhOCH₃)₂PhSO₃H | 2 | none |
| Example 5 | A | - | none | 0 | Ni catalyst | 20 | MMAO-3A | 200 | none |
| Comparative Example 1 | A | - | Ethylene | 0.1 | Pd₂(dba)₃ | 20 | P(PhOCH₃)₂PhSO₃H | 2 | Toluene |
| Comparative Example 2 | A | - | Ethylene | 0.1 | Pd₂(dba)₃ | 20 | P(PhOCH₃)₂PhSO₃H | 2 | Toluene |
| Comparative Example 3 | A | - | Ethylene | 0.1 | Pd₂(dba)₃ | 20 | P(PhOCH₃)₂PhSO₃H | 2 | Toluene |

On the other hand, for each of the cyclic olefin (co)polymers obtained in the examples and comparative examples, the yield relative to the amount of catalyst used, the cyclic olefin content, and the glass transition temperature Tg are shown in Table 2. The cyclic olefin content represents the proportion of structural units derived from the monomer A and/or the monomer B in the (co)polymer, and the higher this amount, the higher the proportion of fluorine in the (co)polymer.

**[Table 2]**

| | Yield/catalyst amount [g/µg] | Cyclic olefin content [mol%] | Tg [°C] |
|---|---|---|---|
| Example 1 | 44 | 52 | 141 |
| Example 2 | 5 | 66 | 183 |
| Example 3 | 34 | 50 | 135 |
| Example 4 | 18 | 44 | 129 |
| Example 5 | 3 | 100 | 237 |
| Comparative Example 1 | 8 | 18 | 43 |
| Comparative Example 2 | 19 | 25 | 65 |
| Comparative Example 3 | 9 | 34 | 90 |

Based on Table 2, it is evident that in each of Examples 1 to 5, the cyclic olefin content exceeds 40 mol%, confirming that a fluorine-rich cyclic olefin (co)polymer had been obtained. In contrast, in Comparative Examples 1 to 3, which used toluene as a solvent, in each case the cyclic olefin content was less than 40 mol%, indicating that a fluorine-rich cyclic olefin (co)polymer had not been obtained. In other words, it is surmised that using the fluorinated norbornene (the monomer represented by general formula (2)) as the solvent enabled the amount of fluorinated norbornene in the (co)polymer to be increased.

## Claims

1. A fluorine-containing cyclic olefin (co)polymer containing a structural unit represented by general formula (1) shown below and a structural unit derived from an α-olefin having 2 to 10 carbon atoms, wherein
an amount of the structural unit represented by general formula (1) exceeds 40 mol%, and an amount of the structural unit derived from an α-olefin having 2 to 10 carbon atoms is at least 0 mol% but less than 60 mol%: 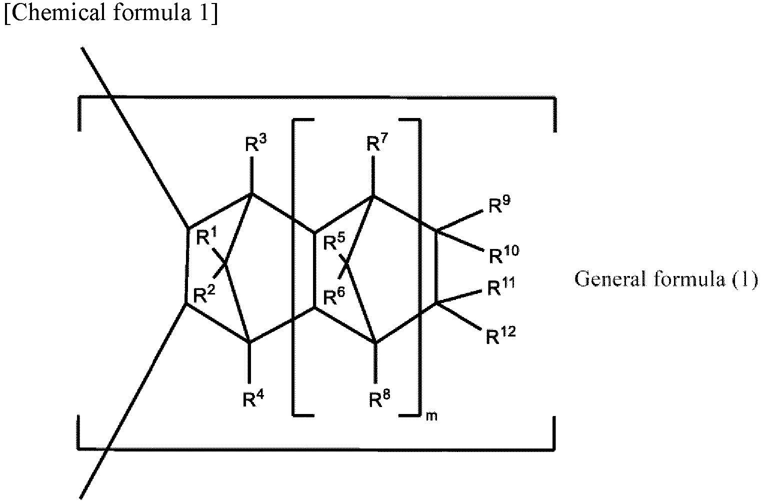
wherein in general formula (1), R¹ to R⁸ each represent, independently, a moiety selected from the group consisting of a hydrogen atom, halogen atoms and hydrocarbon groups,
R⁹ to R¹² each represent, independently, a hydrogen atom, a fluorine atom, a substituted or unsubstituted alkyl group, an alkyl group having a fluorine atom, an alkoxy group having a fluorine atom, an ether linkage-containing alkyl group having a fluorine atom, or a substituent represented by -COOR¹³ or -OCOR¹³, provided that at least one fluorine atom is included within R⁹ to R¹², and R⁹ or R¹⁰, and R¹¹ or R¹² may be bonded together to form a ring,
R¹³ represents a substituted or unsubstituted alkyl group, or an alkyl group having a fluorine atom, and
furthermore, m represents 0 or a positive integer, and when m is 2 or greater, each of R⁵ to R⁸ in repeating units may be identical or different, and when m=0, at least one of R¹ to R⁴ and R⁹ to R¹² is not a hydrogen atom.

2. The fluorine-containing cyclic olefin (co)polymer according to Claim 1, wherein the (co)polymer is amorphous.

3. The fluorine-containing cyclic olefin (co)polymer according to Claim 1 or 2, wherein a DSC curve, obtained in accordance with a method disclosed in JIS K7121 by conducting measurements with a differential scanning calorimeter under conditions including a nitrogen atmosphere and a rate of temperature increase of 20°C/minute, has no melting point peak within a range from 25 to 350°C.

4. A method for producing a fluorine-containing cyclic olefin (co)polymer, the method comprising:
an addition step of adding, at least, monomers including a monomer represented by general formula (2) shown below and an α-olefin having 2 to 10 carbon atoms, a catalyst, and a solvent to a polymerization vessel, and
a polymerization step of polymerizing the monomers in the polymerization vessel in presence of the catalyst, wherein
in the addition step, an amount added of the monomer represented by general formula (2) exceeds 40 mol%, an amount added of the α-olefin having 2 to 10 carbon atoms is at least 0 mol% but less than 60 mol%, and the monomer represented by general formula (2) is also used as a solvent, wherein an amount added of the monomer represented by general formula (2) exceeds 50% by mass of the solvent: 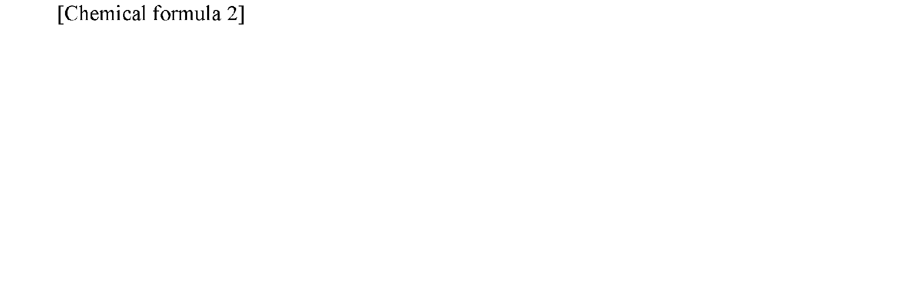 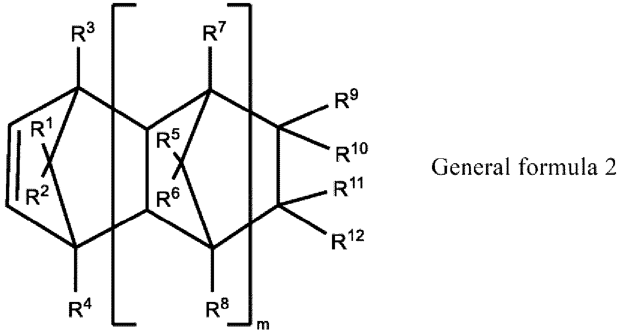
wherein in general formula (2), R¹ to R¹² each represent, independently, a hydrogen atom, a halogen atom, a hydrocarbon group, a substituted or unsubstituted alkyl group, an alkyl group having a fluorine atom, an alkoxy group having a fluorine atom, an ether linkage-containing alkyl group having a fluorine atom, or a substituent represented by -COOR¹³ or -OCOR¹³, provided that at least one fluorine atom is included within R¹ to R¹², and R⁹ or R¹⁰, and R¹¹ or R¹² may be bonded together to form a ring,
R¹³ represents a substituted or unsubstituted alkyl group, or an alkyl group having a fluorine atom, and
furthermore, m represents 0 or a positive integer, and when m is 2 or greater, each of R⁵ to R⁸ in repeating units may be identical or different, and when m=0, at least one of R¹ to R⁴ and R⁹ to R¹² is not a hydrogen atom.

5. The method for producing a fluorine-containing cyclic olefin (co)polymer according to Claim 4, wherein at least one catalyst is a catalyst containing a metal element from group 10 of the periodic table or a catalyst containing a metal element from group 4 of the periodic table.

6. The method for producing a fluorine-containing cyclic olefin (co)polymer according to Claim 5, wherein in those cases where at least one catalyst is a catalyst containing a metal element from group 10 of the periodic table, the catalyst does not contain aluminoxane.

7. The method for producing a fluorine-containing cyclic olefin (co)polymer according to Claim 5, wherein in those cases where at least one catalyst is a catalyst containing a metal element from group 10 of the periodic table, the catalyst does not contain an organoboron compound.
